(19) Europäisches Patentamt / European Patent Office / Office européen des brevets

(11) **EP 4 098 671 A1**

(12) **EUROPEAN PATENT APPLICATION**
published in accordance with Art. 153(4) EPC

(43) Date of publication:
**07.12.2022 Bulletin 2022/49**

(21) Application number: **21748306.4**

(22) Date of filing: **20.01.2021**

(51) International Patent Classification (IPC):
*C08F 212/06* (2006.01)  *C08F 220/10* (2006.01)
*C08F 220/44* (2006.01)  *H01M 4/62* (2006.01)
*H01M 10/0562* (2010.01)

(52) Cooperative Patent Classification (CPC):
**C08F 212/06; C08F 220/10; C08F 220/44;**
**H01M 4/62; H01M 10/0562;** Y02E 60/10;
Y02P 70/50

(86) International application number:
**PCT/JP2021/001865**

(87) International publication number:
**WO 2021/153376 (05.08.2021 Gazette 2021/31)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **31.01.2020  JP 2020015412**

(71) Applicant: **Zeon Corporation**
**Tokyo 100-8246 (JP)**

(72) Inventor: **MATSUO Yusaku**
**Tokyo 100-8246 (JP)**

(74) Representative: **Parchmann, Stefanie**
**Maiwald GmbH**
**Elisenhof**
**Elisenstraße 3**
**80335 München (DE)**

(54) **BINDER PARTICLES FOR ALL-SOLID-STATE BATTERY, COMPOSITION FOR ALL-SOLID-STATE BATTERY, FUNCTIONAL LAYER FOR ALL-SOLID-STATE BATTERY, AND ALL-SOLID-STATE BATTERY**

(57)    Provided are binder particles for an all-solid-state battery with which an all-solid-state battery having excellent battery characteristics can be obtained even in a situation in which the all-solid-state battery is produced by a dry method. The binder particles for an all-solid-state battery are formed of a polymer and have a cohesion of not less than 1% and less than 30% and a volume-average particle diameter D50 of not less than 10 $\mu$m and not more than 100 $\mu$m. Moreover, a composition for an all-solid-state battery contains these binder particles for an all-solid-state battery and solid electrolyte particles. Furthermore, a functional layer for an all-solid-state battery is formed from this composition for an all-solid-state battery. Also, an all-solid-state battery includes this functional layer for an all-solid-state battery.

**Description**

TECHNICAL FIELD

The present disclosure relates to binder particles for an all-solid-state battery, a composition for an all-solid-state battery, a functional layer for an all-solid-state battery, and an all-solid-state battery.

BACKGROUND

Demand for batteries such as lithium ion batteries has been increasing in recent years for various applications such as mobile information terminals, mobile electronic devices, and other mobile terminals, and also domestic small power storage devices, electric two-wheelers, electric vehicles, and hybrid electric vehicles.

The widespread use of batteries in such applications has been accompanied by demand for further improvement of battery safety. One example of an effective method for ensuring battery safety is by preventing leakage of an organic electrolyte solution having an electrolyte dissolved in an organic solvent. On the other hand, studies are being made in relation to techniques of producing batteries in which every member is formed of a solid and in which a solid electrolyte layer is included in place of a combustible organic electrolyte solution (all-solid-state batteries).

Specifically, an all-solid-state battery typically includes a solid electrolyte layer as an electrolyte layer between a positive electrode and a negative electrode. Production of an all-solid-state battery is typically carried out using a binder. The binder is used with the aim of, for example, binding components such as solid electrolyte particles and/or an electrode active material in a solid electrolyte layer or in an electrode active material layer of an electrode that includes the electrode active material layer on a current collector, and thereby preventing these components from detaching from a battery member such as an electrode.

For example, Patent Literature (PTL) 1 to 3 describe the formation of an electrode active material layer through application and drying, on a current collector, of a slurry composition for an electrode layer that contains an electrode active material, solid electrolyte particles, a specific binder, and a solvent (dispersion medium). These documents also describe the formation of a solid electrolyte layer through application and drying, on an electrode active material layer, of a slurry composition for a solid electrolyte layer that contains solid electrolyte particles, a specific binder, and a solvent (dispersion medium).

CITATION LIST

Patent Literature

PTL 1: JP6459691B2
PTL 2: JP2015-088486A
PTL 3: WO2016/136090A1

SUMMARY

(Technical Problem)

However, the conventional techniques described above in which an electrode active material layer or solid electrolyte layer (hereinafter, these layers are also referred to collectively using the term "functional layer") is formed using a slurry composition that contains a solvent (dispersion medium) leave room for improvement in terms that it is necessary to disperse components well in the slurry composition and that operations such as application and drying are complicated.

One example of a technique that may be considered in order to solve such problems is a technique in which components for forming a functional layer are dry mixed (dry blended) and then the resultant composition is shaped by a shaping method such as hot pressing to form a functional layer.

However, studies conducted by the inventor have revealed that when a conventional binder such as described above is used to produce an all-solid-state battery by a dry method, agglomeration (blocking) of binder particles occurs due to poor fluidity thereof, and close adherence of the binder particles with electrode active material particles and/or solid electrolyte particles in an electrode active material layer or a solid electrolyte layer is not necessarily sufficient. Consequently, when an all-solid-state battery has been produced using such a binder, there have been instances in which it has not been possible to sufficiently bind electrode active material particles and/or solid electrolyte particles to one another and in which battery characteristics such as output characteristics and cycle characteristics have been inadequate.

Accordingly, an object of the present disclosure is to provide binder particles for an all-solid-state battery, a composition for an all-solid-state battery, and a functional layer for an all-solid-state battery with which an all-solid-state battery having excellent battery characteristics can be obtained even in a situation in which the all-solid-state battery is produced by a dry method, and also to provide an all-solid-state battery having excellent battery characteristics even in a situation in which the all-solid-state battery is produced by a dry method.

(Solution to Problem)

The inventor conducted diligent studies to achieve the object set forth above. As a result thereof, the inventor discovered that the object set forth above can be achieved using binder particles for an all-solid-state battery having a particular cohesion and a particular average particle diameter, and, in this manner, completed the present disclosure.

Specifically, the present disclosure aims to advantageously solve the problem set forth above, and presently disclosed binder particles for an all-solid-state battery comprise a polymer and have a cohesion of not less than 1% and less than 30% and a volume-average particle diameter D50 of not less than 10 μm and not more than 100 μm. By using binder particles for an all-solid-state battery that have a particular cohesion and a particular average particle diameter in this manner, it is possible to cause good binding of electrode active material particles and/or solid electrolyte particles in a functional layer even in a situation in which the functional layer is produced by a dry method, and thus it is possible to improve battery characteristics of an obtained all-solid-state battery.

Note that the "cohesion" of binder particles for an all-solid-state battery referred to in the present disclosure can be measured by a method described in the subsequent EXAMPLES section.

Also note that the "volume-average particle diameter D50" of binder particles for an all-solid-state battery referred to in the present disclosure is the particle diameter at which, in a particle size distribution (by volume) measured by laser diffraction, cumulative volume calculated from a small diameter end of the distribution reaches 50%, and can be measured by a method described in the subsequent EXAMPLES section.

In the presently disclosed binder particles for an all-solid-state battery, the polymer preferably has a glass-transition temperature of not lower than 50°C and not higher than 120°C. Through the polymer having a glass-transition temperature of not lower than 50°C and not higher than 120°C, it is possible to further prevent excessive agglomeration and reduction of close adherence of the binder particles for an all-solid-state battery and also to further prevent reduction of strength caused by the binder particles for an all-solid-state battery becoming excessively hard in an all-solid-state battery that is produced using the binder particles for an all-solid-state battery. Consequently, battery characteristics of an all-solid-state battery can be even further improved.

Note that the "glass-transition temperature" of a polymer contained in binder particles for an all-solid-state battery that is referred to in the present disclosure can be measured by a method described in the subsequent EXAMPLES section.

In the presently disclosed binder particles for an all-solid-state battery, it is preferable that the polymer includes an ethylenically unsaturated acid monomer unit and that the ethylenically unsaturated acid monomer unit has a proportional content of not less than 1.5 mass% and less than 10 mass% in the polymer. When the polymer includes an ethylenically unsaturated acid monomer unit in the proportion set forth above, battery characteristics of an all-solid-state battery can be even further improved.

In the presently disclosed binder particles for an all-solid-state battery, it is preferable that the polymer includes an acrylic acid alkyl ester monomer unit having an alkyl chain carbon number of 4 or more and a methacrylic acid alkyl ester monomer unit having an alkyl chain carbon number of 4 or less and that the acrylic acid alkyl ester monomer unit having an alkyl chain carbon number of 4 or more has a proportional content of not less than 5 mass% and not more than 40 mass% in the polymer and the methacrylic acid alkyl ester monomer unit having an alkyl chain carbon number of 4 or less has a proportional content of not less than 5 mass% and not more than 40 mass% in the polymer. When the polymer includes an acrylic acid alkyl ester monomer unit having an alkyl chain carbon number of 4 or more in the proportion set forth above, the binder particles for an all-solid-state battery can display better close adherence with electrode active material particles and/or solid electrolyte particles in an all-solid-state battery that is produced using the binder particles for an all-solid-state battery. Consequently, battery characteristics of an all-solid-state battery can be even further improved. Moreover, when the polymer includes a methacrylic acid alkyl ester monomer unit having an alkyl chain carbon number of 4 or less in the proportion set forth above, the binder particles for an all-solid-state battery can display better close adherence with electrode active material particles and/or solid electrolyte particles and reduction of strength caused by the binder particles becoming excessively hard can be further prevented in an all-solid-state battery that is produced using the binder particles for an all-solid-state battery. Consequently, battery characteristics of an all-solid-state battery can be even further improved.

In the presently disclosed binder particles for an all-solid-state battery, it is preferable that the polymer includes at least one monomer unit selected from the group consisting of a nitrile group-containing monomer unit and an aromatic vinyl monomer unit. When the polymer includes at least one monomer unit selected from the group consisting of a nitrile group-containing monomer unit and an aromatic vinyl monomer unit, it is possible to further prevent excessive agglomeration and reduction of close adherence of the binder particles for an all-solid-state battery and also to further prevent reduction of strength caused by the binder particles for an all-solid-state battery becoming excessively hard. Consequently, battery characteristics of an all-solid-state battery can be even further improved.

In the presently disclosed binder particles for an all-solid-state battery, it is preferable that the polymer includes a cross-linkable monomer unit and that the cross-linkable monomer unit has a proportional content of not less than 0.1 mass% and less than 2.0 mass% in the polymer. When the polymer includes a cross-linkable monomer unit in the proportion set forth above, the polymer is cross-linked to a suitable degree and the binder particles have a suitable amount of gel structure, which makes it possible to further prevent excessive agglomeration of the binder particles for an all-solid-state battery and also to further prevent reduction of strength caused by the binder particles for an all-solid-state battery becoming excessively hard. Consequently, battery characteristics of an all-solid-state battery can be even further improved.

Moreover, the present disclosure aims to advantageously solve the problem set forth above, and a presently disclosed composition for an all-solid-state battery comprises: any of the binder particles for an all-solid-state battery set forth above; and solid electrolyte particles. A composition for an all-solid-state battery that contains the binder particles for an all-solid-state battery set forth above enables good formation of a functional layer and can cause an all-solid-state battery to display excellent battery characteristics.

The presently disclosed composition for an all-solid-state battery preferably further comprises an electrode active material. The inclusion of an electrode active material enables good formation of an electrode active material layer and can cause an all-solid-state battery to display excellent battery characteristics.

The presently disclosed composition for an all-solid-state battery preferably further comprises a conductive additive. The further inclusion of a conductive additive in the composition for an all-solid-state battery containing an electrode active material can improve electrical conductivity of an obtained electrode and even further improve battery characteristics of an all-solid-state battery.

Furthermore, the present disclosure aims to advantageously solve the problem set forth above, and a presently disclosed functional layer for an all-solid-state battery is formed using any one of the compositions for an all-solid-state battery set forth above. A functional layer that is formed using a composition for an all-solid-state battery containing the binder particles for an all-solid-state battery set forth above can cause an all-solid-state battery to display excellent battery characteristics.

Also, the present disclosure aims to advantageously solve the problem set forth above, and a presently disclosed all-solid-state battery comprises the functional layer for an all-solid-state battery set forth above. An all-solid-state battery that includes a functional layer for an all-solid-state battery produced using the binder particles for an all-solid-state battery set forth above has excellent battery characteristics.

(Advantageous Effect)

According to the present disclosure, it is possible to provide binder particles for an all-solid-state battery, a composition for an all-solid-state battery, and a functional layer for an all-solid-state battery with which an all-solid-state battery having excellent battery characteristics can be obtained even in a situation in which the all-solid-state battery is produced by a dry method, and also to provide an all-solid-state battery having excellent battery characteristics even in a situation in which the all-solid-state battery is produced by a dry method.

DETAILED DESCRIPTION

The following provides a detailed description of embodiments of the present disclosure.

The presently disclosed binder particles for an all-solid-state battery (hereinafter, also referred to simply as "binder particles") are used in production of an all-solid-state battery (for example, formation of a functional layer). The presently disclosed composition for an all-solid-state battery contains at least the presently disclosed binder particles for an all-solid-state battery mentioned above and solid electrolyte particles and is used in formation of a functional layer that is included in an all-solid-state battery. The presently disclosed functional layer for an all-solid-state battery is formed from the presently disclosed composition for an all-solid-state battery. Moreover, the presently disclosed all-solid-state battery includes the presently disclosed functional layer for an all-solid-state battery.

(Binder particles)

The presently disclosed binder particles are formed of a polymer and have a cohesion of not less than 1% and less than 30% and a volume-average particle diameter D50 of not less than 10 $\mu$m and not more than 100 $\mu$m. The presently disclosed binder particles are particles that are present in a particulate form in a gas phase and are normally present as an assembly of a plurality of particles.

Note that the binder particles may contain additives, impurities mixed in during a production process, and so forth. However, the binder particles do not normally contain an active material or a solid electrolyte.

(Properties of binder particles)

<Cohesion>

The cohesion of the presently disclosed binder particles is required to be not less than 1% and less than 30%, is preferably 1.5% or more, more preferably 2% or more, and even more preferably 10% or more, and is preferably 20% or less, and more preferably 15% or less. Through the binder particles having a cohesion of not less than 1% and less than 30%, the binder particles display good agglomeration resistance (blocking resistance) and can be uniformly dry blended with electrode active material particles and/or solid electrolyte particles, and the binder particles can also closely adhere well with the electrode active material particles and/or solid electrolyte particles. In a situation in which the cohesion of the binder particles is less than 1%, the binder particles no longer closely adhere well with electrode active material particles and/or solid electrolyte particles, and cycle characteristics of an all-solid-state battery deteriorate. On the other hand, in a situation in which the cohesion of the binder particles is 30% or more, the binder particles excessively agglomerate with one another, and fluidity (dispersibility) during dry blending decreases. Consequently, close adherence with electrode active material particles and/or solid electrolyte particles decreases and cycle characteristics deteriorate.

The cohesion of the binder particles can be controlled by adjusting the glass-transition temperature of the subsequently described polymer and/or the proportional content of a cross-linkable monomer unit included in the polymer, for example.

<Volume-average particle diameter D50>

The volume-average particle diameter D50 of the presently disclosed binder particles is required to be not less than 10 $\mu$m and not more than 100 $\mu$m, is preferably 15 $\mu$m or more, more preferably 20 $\mu$m or more, and even more preferably 50 $\mu$m or more, and is preferably 90 $\mu$m or less, more preferably 85 $\mu$m or less, and even more preferably 80 $\mu$m or less. In a situation in which the volume-average particle diameter D50 is less than 10 $\mu$m, an excessive increase of contact area (particle coverage area) with electrode active material particles and/or solid electrolyte particles causes increased resistance. Consequently, output characteristics of an all-solid-state battery deteriorate. On the other hand, in a situation in which the volume-average particle diameter D50 is more than 100 $\mu$m, reduction of contact area with electrode active material particles and/or solid electrolyte particles causes reduction of close adherence. Consequently, cycle characteristics of an all-solid-state battery deteriorate.

Note that the volume-average particle diameter D50 can be set within a desired range through adjustment of the amount of an emulsifier or the like, the amounts of monomers, and so forth in a subsequently described synthesis method of the polymer, for example. Alternatively, a subsequently described particle size distribution adjustment method can be used to set the volume-average particle diameter D50 within a desired range.

<Water content>

The water content in the presently disclosed binder particles is preferably 10,000 ppm or less, more preferably 5,000 ppm or less, even more preferably 2,000 ppm or less, and particularly preferably 1,000 ppm or less. When the water content is more than 10,000 ppm, water facilitates agglomeration (blocking) of the binder particles and may cause deterioration of output characteristics and/or cycle characteristics of an all-solid-state battery.

Note that the water content of binder particles can be measured by a method described in the subsequent EXAMPLES section.

(Polymer)

<Glass-transition temperature>

The glass-transition temperature of the polymer forming the presently disclosed binder particles is preferably 50°C or higher, more preferably 60°C or higher, and even more preferably 75°C or higher, and is preferably 120°C or lower, more preferably 110°C or lower, and even more preferably 100°C or lower. When the glass-transition temperature of the polymer is 50°C or higher, deterioration of cycle characteristics of an all-solid-state battery caused by excessive agglomeration of the binder particles and reduction of close adherence thereof with an electrode active material and/or solid electrolyte particles can be further prevented. Moreover, when the glass-transition temperature of the polymer is 120°C or lower, deterioration of cycle characteristics caused by excessive hardening and reduced strength of the binder particles can be further prevented.

<Chemical composition>

The chemical composition of the polymer is not specifically limited and can be any chemical composition that can be adopted for a binder of an all-solid-state battery. The polymer may, for example, include an ethylenically unsaturated acid monomer unit, an acrylic acid alkyl ester monomer unit having an alkyl chain carbon number of 4 or more, a methacrylic acid alkyl ester monomer unit having an alkyl chain carbon number of 4 or less, at least one monomer unit selected from the group consisting of a nitrile group-containing monomer unit and an aromatic vinyl monomer unit, and monomer units other than the preceding monomer units.

Note that when a polymer is said to "include a monomer unit" in the present disclosure, this means that "a polymer obtained using that monomer includes a structural unit (repeating unit) derived from the monomer".

«Ethylenically unsaturated acid monomer unit»

The ethylenically unsaturated acid monomer unit that can be included in the polymer is a repeating unit that is derived from an ethylenically unsaturated acid monomer and includes an ethylenically unsaturated bond and an acidic group. The acidic group may be a -COOH group (carboxy group), $-SO_3$ group (sulfo group), $-PO_4H_2$ (phosphate group), or the like. Accordingly, an acidic group-containing monomer such as a carboxy group-containing monomer, a sulfo group-containing monomer, or a phosphate group-containing monomer can be used as the ethylenically unsaturated acid monomer. Moreover, a monomer that produces any of the above-described acidic groups through hydrolysis, for example, can also be used as an acidic group-containing monomer. Specific examples of such acidic group-containing monomers include acid anhydrides that can produce a carboxy group through hydrolysis.

One of these monomers may be used individually, or two or more of these monomers may be used in combination in a freely selected ratio.

Examples of carboxy group-containing monomers include monocarboxylic acids, dicarboxylic acids, anhydrides of dicarboxylic acids, and derivatives of any thereof. Examples of monocarboxylic acids include acrylic acid, methacrylic acid, crotonic acid, 2-ethylacrylic acid, and isocrotonic acid. Examples of dicarboxylic acids include maleic acid, fumaric acid, itaconic acid, and methylmaleic acid. Examples of acid anhydrides of dicarboxylic acids include maleic anhydride, acrylic anhydride, methylmaleic anhydride, and dimethylmaleic anhydride. Of these examples, acrylic acid, methacrylic acid, and itaconic acid are preferable.

Examples of sulfo group-containing monomers include vinyl sulfonic acid, methyl vinyl sulfonic acid, (meth)allyl sulfonic acid, styrene sulfonic acid, (meth)acrylic acid 2-sulfoethyl, 2-acrylamido-2-methylpropane sulfonic acid, 3-allyloxy-2-hydroxypropane sulfonic acid, and 2-(N-acryloyl)amino-2-methyl-1,3-propane-disulfonic acid. Of these examples, 2-acrylamido-2-methylpropane sulfonic acid is preferable.

Examples of phosphate group-containing monomers include 2-(meth)acryloyloxyethyl phosphate, methyl-2-(meth)acryloyloxyethyl phosphate, and ethyl-(meth)acryloyloxyethyl phosphate.

The proportional content of the ethylenically unsaturated acid monomer unit in the polymer when the amount of all monomer units forming the polymer is taken to be 100 mass% is preferably 1.5 mass% or more, more preferably 1.7 mass% or more, even more preferably 2.0 mass% or more, and further preferably 3.0 mass% or more, and is preferably less than 10 mass%, more preferably 8 mass% or less, and even more preferably 6 mass% or less. When the proportional content of the ethylenically unsaturated acid monomer unit in the polymer is not less than any of the lower limits set forth above, agglomeration of the binder particles can be prevented, close adherence of the binder particles with electrode active material particles and/or solid electrolyte particles can be further improved, and cycle characteristics can be further improved. On the other hand, when the proportional content of the ethylenically unsaturated acid monomer unit in the polymer is not more than any of the upper limits set forth above, a reaction between the ethylenically unsaturated acid monomer unit and a solid electrolyte can be prevented, increased resistance due to reaction thereof can be prevented, and output characteristics of an all-solid-state battery can be further improved.

«Acrylic acid alkyl ester monomer unit having alkyl chain carbon number of 4 or more»

The acrylic acid alkyl ester monomer unit having an alkyl chain carbon number of 4 or more is a repeating unit that is derived from an acrylic acid alkyl ester monomer having an alkyl chain carbon number of 4 or more.

Examples of acrylic acid alkyl ester monomers having an alkyl chain carbon number of 4 or more than can form the acrylic acid alkyl ester monomer unit having an alkyl chain carbon number of 4 or more include n-butyl acrylate, t-butyl acrylate, isobutyl acrylate, n-pentyl acrylate, isopentyl acrylate, hexyl acrylate, heptyl acrylate, octyl acrylate (n-octyl acrylate, isooctyl acrylate, 2-ethylhexyl acrylate, etc.), nonyl acrylate, isononyl acrylate, decyl acrylate, isodecyl acrylate, undecyl acrylate, dodecyl acrylate, tridecyl acrylate, tetradecyl acrylate, pentadecyl acrylate, hexadecyl acrylate, heptadecyl acrylate, and stearyl acrylate. Of these examples, butyl acrylate and 2-ethylhexyl acrylate are preferable. One of these compounds may be used individually, or two or more of these compounds may be used in combination in a freely selected ratio.

The proportional content of the acrylic acid alkyl ester monomer unit having an alkyl chain carbon number of 4 or more in the polymer when the amount of all monomer units forming the polymer is taken to be 100 mass% is preferably 5 mass% or more, more preferably 10 mass% or more, even more preferably 15 mass% or more, and further preferably 19 mass% or more, and is preferably 40 mass% or less, preferably 30 mass% or less, and more preferably 25 mass% or less. When the proportional content of the acrylic acid alkyl ester monomer unit having an alkyl chain carbon number of 4 or more in the polymer is not less than any of the lower limits set forth above, deterioration of cycle characteristics caused by reduction of close adherence with solid electrolyte particles can be further prevented. On the other hand, when the proportional content is not more than any of the upper limits set forth above, deterioration of cycle characteristics caused by agglomeration of the binder particles and reduction of close adherence thereof with an electrode active material and/or solid electrolyte particles can be further prevented.

«Methacrylic acid alkyl ester monomer unit having alkyl chain carbon number of 4 or less»

The methacrylic acid alkyl ester monomer unit having an alkyl chain carbon number of 4 or less is a repeating unit that is derived from a methacrylic acid alkyl ester monomer having an alkyl chain carbon number of 4 or less.
Examples of methacrylic acid alkyl ester monomers having an alkyl chain carbon number of 4 or less that can form the methacrylic acid alkyl ester monomer unit having an alkyl chain carbon number of 4 or less include methyl methacrylate, ethyl methacrylate, n-propyl methacrylate, isopropyl methacrylate, n-butyl methacrylate, t-butyl methacrylate, and isobutyl methacrylate. Of these examples, methyl methacrylate and ethyl methacrylate are preferable, and methyl methacrylate is more preferable. One of these compounds may be used individually, or two or more of these compounds may be used in combination in a freely selected ratio.
The proportional content of the methacrylic acid alkyl ester monomer unit having an alkyl chain carbon number of 4 or less in the polymer when the amount of all monomer units forming the polymer is taken to be 100 mass% is preferably 5 mass% or more, more preferably 7 mass% or more, even more preferably 9 mass% or more, and further preferably 11.5 mass% or more, and is preferably 40 mass% or less, preferably 25 mass% or less, and more preferably 20 mass% or less. When the proportional content of the methacrylic acid alkyl ester monomer unit having an alkyl chain carbon number of 4 or less in the polymer is not less than any of the lower limits set forth above, deterioration of cycle characteristics caused by agglomeration of the binder particles and reduction of close adherence thereof with an electrode active material and/or solid electrolyte particles can be further prevented. Moreover, when the proportional content is not more than any of the upper limits set forth above, deterioration of cycle characteristics caused by excessive hardening and reduced strength of the binder particles can be further prevented.

«At least one monomer unit selected from group consisting of nitrile group-containing monomer unit and aromatic vinyl monomer unit»

The at least one monomer unit selected from the group consisting of a nitrile group-containing monomer unit and an aromatic vinyl monomer unit is a repeating unit that is derived from at least one monomer selected from the group consisting of a nitrile group-containing monomer and an aromatic vinyl monomer.

-Nitrile group-containing monomer unit-

Examples of nitrile group-containing monomers that can form the nitrile group-containing monomer unit include $\alpha,\beta$-ethylenically unsaturated nitrile monomers. Specifically, any $\alpha,\beta$-ethylenically unsaturated compound that includes a nitrile group can be used as an $\alpha,\beta$-ethylenically unsaturated nitrile monomer without any specific limitations. Examples include acrylonitrile; $\alpha$-halogenoacrylonitriles such as $\alpha$-chloroacrylonitrile and $\alpha$-bromoacrylonitrile; and $\alpha$-alkylacrylonitriles such as methacrylonitrile and $\alpha$-ethylacrylonitrile. Of these examples, acrylonitrile and methacrylonitrile are preferable as nitrile group-containing monomers from a viewpoint of favorably raising the glass-transition temperature of the polymer. One of these compounds may be used individually, or two or more of these compounds may be used in combination.

-Aromatic vinyl monomer unit-

Examples of aromatic vinyl compounds that can form the aromatic vinyl monomer unit include styrene, $\alpha$-methylstyrene, o-methylstyrene, m-methylstyrene, p-methylstyrene, t-butylstyrene, divinylbenzene, N,N-dimethyl-p-aminoethyl styrene, 2,4-dimethyl styrene, N,N-diethyl-p-aminoethylstyrene, 2,4-diethylstyrene, vinylnaphthalene, and vinylanthracene. Of these examples, styrene is particularly preferable from a viewpoint of favorably raising the glass-transition temperature of the polymer. One of these compounds may be used individually, or two or more of these compounds may be used in combination in a freely selected ratio.

The proportional content of the at least one monomer unit selected from the group consisting of a nitrile group-containing monomer unit and an aromatic vinyl monomer unit in the polymer when the amount of all monomer units forming the polymer is taken to be 100 mass% is preferably 40 mass% or more, more preferably 50 mass% or more, even more preferably 60 mass% or more, and even more preferably 66.25 mass% or more, and is preferably 80 mass% or less, more preferably 75 mass% or less, and even more preferably 70 mass% or less. When the proportional content of the at least one monomer unit selected from the group consisting of a nitrile group-containing monomer unit and an aromatic vinyl monomer unit in the polymer is not less than any of the lower limits set forth above, the glass-transition temperature of the polymer can be favorably improved, and deterioration of cycle characteristics caused by agglomeration of the binder particles and reduction of close adherence thereof with an electrode active material and/or solid electrolyte particles can be further prevented. Moreover, when the proportional content is not more than any of the upper limits set forth above, deterioration of cycle characteristics caused by excessive hardening and reduced strength of the binder particles can be further prevented.

«Cross-linkable monomer unit»

A cross-linkable monomer unit is a repeating unit that is derived from a cross-linkable monomer. A monomer that can form a cross-linked structure when polymerized (however, compounds described above as "monomers" are excluded) can be used as a cross-linkable monomer that can form a cross-linkable monomer unit. Specifically, a monofunctional monomer that includes a thermally cross-linkable group and one ethylenically unsaturated bond per molecule or a polyfunctional monomer that includes two or more ethylenically unsaturated bonds per molecule may be used. Examples of the thermally cross-linkable group included in the monofunctional monomer include an epoxy group, an N-methylol amide group, an oxetanyl group, an oxazoline group, and combinations thereof.

The cross-linkable monomer may be hydrophobic or may be hydrophilic.

When a cross-linkable monomer is referred to as "hydrophobic" in the present disclosure, this means that the cross-linkable monomer does not include a hydrophilic group, whereas, when a cross-linkable monomer is referred to as "hydrophilic" in the present disclosure, this means that the crosslinkable monomer includes a hydrophilic group. The term "hydrophilic group" used with respect to a cross-linkable monomer refers to a carboxy group, a hydroxy group, a sulfo group, a phosphate group, an epoxy group, a thiol group, an aldehyde group, an amide group, an oxetanyl group, or an oxazoline group.

Examples of hydrophobic cross-linkable monomers include polyfunctional (meth)acrylates such as allyl (meth)acrylate, ethylene di(meth)acrylate, ethylene glycol di(meth)acrylate, diethylene glycol di(meth)acrylate, triethylene glycol di(meth)acrylate, tetraethylene glycol di(meth)acrylate, and trimethylolpropane tri(meth)acrylate; polyfunctional allyl/vinyl ethers such as dipropylene glycol diallyl ether, polyglycol diallyl ether, triethylene glycol divinyl ether, hydroquinone diallyl ether, and tetraallyloxyethane; and divinylbenzene.

Examples of hydrophilic cross-linkable monomers include vinyl glycidyl ether, allyl glycidyl ether, N-methylolacrylamide, acrylamide, and allylmethacrylamide.

Of these examples, allyl methacrylate, ethylene dimethacrylate, and allyl glycidyl ether are preferable as cross-linkable monomers.

Note that one of these examples may be used individually, or two or more of these examples may be used in combination.

The proportional content of the cross-linkable monomer unit in the polymer when the amount of all monomer units is taken to be 100 mass% is preferably 0.1 mass% or more, more preferably 0.15 mass% or more, even more preferably 0.2 mass% or more, and further preferably 0.25 mass% or more, and is preferably less than 2.0 mass%, more preferably less than 1.0 mass%, and even more preferably less than 0.5 mass%. When the proportional content of the cross-linkable monomer unit in the polymer is not less than any of the lower limits set forth above, the polymer has an appropriate amount of gel structure, which makes it possible to further prevent excessive agglomeration of the binder particles, reduction of close adherence thereof with an electrode active material and/or solid electrolyte particles, and deterioration of cycle characteristics of an all-solid-state battery. Moreover, when the proportional content is not more than any of the upper limits set forth above, deterioration of cycle characteristics caused by excessive hardening and reduced strength of the binder particles can be further prevented.

«Other monomer units»

Examples of other monomer units besides the monomer units described above include, but are not specifically limited to, repeating units derived from known monomers that are copolymerizable with the monomers described above such as a hydroxy group-containing monomer unit and a conjugated diene monomer unit.

Examples of hydroxy group-containing monomers that can form the hydroxy group-containing monomer unit include ethylenically unsaturated alcohols such as (meth)allyl alcohol, 3-buten-1-ol, and 5-hexen-1-ol; alkanol esters of ethylenically unsaturated carboxylic acids such as 2-hydroxyethyl acrylate, 2-hydroxypropyl acrylate, 2-hydroxyethyl methacrylate, 2-hydroxypropyl methacrylate, di-2-hydroxyethyl maleate, di-4-hydroxybutyl maleate, and di-2-hydroxypropyl itaconate; esters of (meth)acrylic acid and polyalkylene glycol represented by a general formula $CH_2=CR^1-COO-(C_qH_{2q}O)_p-H$ (where p represents an integer of 2 to 9, q represents an integer of 2 to 4, and $R^1$ represents a hydrogen atom or a methyl group); mono(meth)acrylic acid esters of dihydroxy esters of dicarboxylic acids such as 2-hydroxyethyl-2'-(meth)acryloyloxy phthalate and 2-hydroxyethyl-2'-(meth)acryloyloxy succinate; vinyl ethers such as 2-hydroxyethyl vinyl ether and 2-hydroxypropyl vinyl ether; mono(meth)allyl ethers of alkylene glycols such as (meth)allyl-2-hydroxyethyl ether, (meth)allyl-2-hydroxypropyl ether, (meth)allyl-3-hydroxypropyl ether, (meth)allyl-2-hydroxybutyl ether, (meth)allyl-3-hydroxybutyl ether, (meth)allyl-4-hydroxybutyl ether, and (meth)allyl-6-hydroxyhexyl ether; polyoxyalkylene glycol mono(meth)allyl ethers such as diethylene glycol mono(meth)allyl ether and dipropylene glycol mono(meth)allyl ether; mono(meth)allyl ethers of halogen or hydroxy substituted (poly)alkylene glycols such as glycerin mono(meth)allyl ether, (meth)allyl-2-chloro-3-hydroxypropyl ether, and (meth)allyl-2-hydroxy-3-chloropropyl ether; mono(meth)allyl ethers of polyhydric phenols such as eugenol and isoeugenol, and halogen substituted products thereof; and (meth)allyl thioethers of alkylene glycols such as (meth)allyl-2-hydroxyethyl thioether and (meth)allyl-2-hydroxypropyl thioether. One of these examples may be used individually, or two or more of these examples may be used in combination in a freely selected ratio.

-Conjugated diene monomer unit-

Examples of conjugated diene monomers that can form the conjugated diene monomer unit include aliphatic conjugated diene monomers such as 1,3-butadiene, 2-methyl-1,3-butadiene, 2,3-dimethyl-1,3-butadiene, 2-chloro-1,3-butadiene, substituted linear conjugated pentadienes, and substituted and branched conjugated hexadienes. One of these examples may be used individually, or two or more of these examples may be used in combination in a freely selected ratio.

The proportional content of the above-described other repeating units in the polymer used herein when all repeating units in the polymer are taken to be 100 mass% is preferably 85 mass% or less, more preferably 80 mass% or less, and even more preferably 75 mass% or less.

<Gel structure>

The polymer preferably has a gel structure, and, more specifically, preferably has a gel fraction of 90% or more. When the gel fraction is 90% or more, the polymer has a suitable amount of gel structure, which makes it possible to further prevent deterioration of cycle characteristics of an all-solid-state battery caused by excessive agglomeration of the binder particles and reduction of close adherence thereof with an electrode active material and/or solid electrolyte particles. The gel fraction is an indicator that a polymer has a gel structure and is a value indicating a weight ratio, relative to the overall polymer, of components that do not dissolve in an organic solvent due to bonding and entanglement of polymer chains to one another. The gel fraction can be controlled by adjusting the used amount of the previously described cross-linkable monomer, for example.

Note that the gel fraction can be determined by, for example, pressing binder particles to obtain a film, immersing this film in tetrahydrofuran (THF) for 24 hours, subsequently performing filtration through a 200-mesh stainless steel screen, drying the screen at 100°C for 1 hour after filtration, and dividing the weight increase of the screen by the weight of the film.

<Synthesis method of polymer>

The synthesis method of the polymer used herein is not specifically limited and may, for example, be a method in which the polymer is obtained through polymerization of a monomer composition containing the monomers described above. The polymerization may be performed in the presence of an optionally used chain transfer agent (molecular weight modifier).

The proportional content of each monomer in the monomer composition used to synthesize the polymer can be set in accordance with the proportional content of each repeating unit in the polymer.

Although the polymerization method is not specifically limited, a method such as solution polymerization, suspension polymerization, bulk polymerization, or emulsion polymerization may be used. Also, the type of polymerization reaction may be ionic polymerization, radical polymerization, living radical polymerization, or the like, for example.

The following describes a case in which emulsion polymerization is adopted as the polymerization method.

[Emulsion polymerization]

The emulsion polymerization can be carried out by a standard method. Moreover, typically used polymerization auxiliary materials such as emulsifiers, polymerization initiators, and chain transfer agents can be used in the emulsion polymerization.

Any emulsifier such as an anionic surfactant, nonionic surfactant, cationic surfactant, or amphoteric surfactant may be used so long as the target copolymer is obtained. Of these examples, anionic surfactants such as alkylbenzene sulfonic acid salts, aliphatic sulfonic acid salts, sulfuric acid ester salts of higher alcohols, $\alpha$-olefin sulfonic acid salts, and alkyl ether sulfuric acid ester salts are preferable.

The amount of emulsifier may be any amount so long as the target polymer is obtained but is preferably 0.5 parts by mass or more, and more preferably 1 part by mass or more relative to 100 parts by mass, in total, of monomers in the monomer composition, and is preferably 10 parts by mass or less, and more preferably 5 parts by mass or less relative to 100 parts by mass, in total, of monomers in the monomer composition.

Any polymerization initiator such as sodium persulfate (NaPS), ammonium persulfate (APS), potassium persulfate (KPS), or the like can be used as a polymerization initiator used in the polymerization reaction so long as the target polymer is obtained.

Moreover, a chain transfer agent may be included in the polymerization system during polymerization. Examples of chain transfer agents that may be used include alkyl mercaptans such as n-hexyl mercaptan, n-octyl mercaptan, t-octyl mercaptan, n-dodecyl mercaptan, t-dodecyl mercaptan, and n-stearyl mercaptan; xanthogen compounds such as dimethyl xanthogen disulfide and diisopropyl xanthogen disulfide; terpinolene; thiuram compounds such as tetramethylthiuram disulfide, tetraethylthiuram disulfide, and tetramethylthiuram monosulfide; phenolic compounds such as 2,6-di-t-butyl-4-methylphenol and styrenated phenol; allyl compounds such as allyl alcohol; halogenated hydrocarbon compounds such as dichloromethane, dibromomethane, and carbon tetrabromide; and thioglycolic acid, thiomalic acid, 2-ethylhexyl thioglycolate, diphenylethylene, and $\alpha$-methylstyrene dimer. Of these examples, alkyl mercaptans are preferable from a viewpoint of inhibiting side reactions, and t-dodecyl mercaptan is more preferable. One of these examples may be used individually, or two or more of these examples may be used in combination in a freely selected ratio.

In a case in which a chain transfer agent is used, the used amount of the chain transfer agent is preferably 0.1 parts by mass or more, and more preferably 0.15 parts by mass or more per 100 parts by mass, in total, of monomers in the monomer composition, and is preferably 0.6 parts by mass or less, and more preferably 0.5 parts by mass or less per 100 parts by mass, in total, of monomers in the monomer composition.

Examples of solvents that can be used in a case in which emulsion polymerization is adopted include aqueous solvents. An aqueous solvent is a solvent that contains water and that is not combustible. So long as the above-described copolymer is obtained without loss of the effects disclosed herein, water may be used as a main solvent and an aqueous solvent other than water may be mixed. The aqueous solvent other than water may be a ketone, an alcohol, a glycol, a glycol ether, or an ether.

Note that seed particles may be adopted in the polymerization so as to perform seeded polymerization. The polymerization conditions may also be selected freely in accordance with the polymerization method, type of polymerization initiator, and the like.

The synthesized polymer is a particulate polymer that is dispersed in the solvent and is preferably a polymer that has a particulate form even after drying.

<Granulation of binder particles>

The presently disclosed binder particles can be obtained by granulating the polymer by a conventional and commonly known method. The granulation method is not specifically limited but is preferably a method including a step (A) of granulating a raw material slurry containing the polymer by any granulation method and optionally further including a step (B) of adjusting properties of the obtained particles and other steps.

«Step (A)»

Step (A) is a step in which a raw material slurry containing the polymer is granulated by a commonly known granulation method such as spray drying granulation, tumbling bed granulation, compression-type granulation, stirring-type granulation, extrusion granulation, crushing-type granulation, fluidized bed granulation, fluidized bed multi-functional granulation, pulse combustion drying, or melt granulation, for example, to obtain binder particles. In particular, it is preferable that the raw material slurry is granulated using a nozzle-type or atomizer-type spray dryer in step (A), and more preferable that the raw material slurry is granulated using an atomizer-type spray dryer in step (A).

The granulation conditions can be adjusted as appropriate in accordance with the desired binder particle properties.

<<Step (B)>>

Step (B) is a step of adjusting properties of the particles obtained in the above-described step (A). More specifically, a known particle size distribution adjustment method such as pulverization and/or classification, for example, may be used to adjust the average particle diameter D50 of the binder particles in step (B).

«Other steps»

Examples of other steps include, but are not specifically limited to, a step of mixing the polymer with another polymer, an additive such as a plasticizer, and/or a solvent as optional components, prior to step (A), so as to produce a raw material slurry. The solvent may be water or the like without any specific limitations. Note that in a case in which the previously described polymer is mixed in the form of a solution or a water dispersion, solvent in that solution or water dispersion may be used as the solvent.

The means by which the above-described components are dispersed or dissolved in the solvent may be using a mixing apparatus such as a ball mill, a sand mill, a bead mill, a pigment disperser, a grinding machine, an ultrasonic disperser, a homogenizer, a Homo Mixer, or a planetary mixer, for example.

The solid content concentration and viscosity of the raw material slurry can be adjusted as appropriate depending on the granulation conditions.

(Composition for all-solid-state battery)

The presently disclosed composition for an all-solid-state battery contains at least the presently disclosed binder particles and solid electrolyte particles and may optionally further contain an electrode active material (positive electrode active material or negative electrode active material) and/or additives such as a conductive additive and a reinforcing material. Note that the amount of solvent in the presently disclosed composition for an all-solid-state battery is 0.1 mass% or less.

In a case in which the presently disclosed composition for an all-solid-state battery does not contain an electrode active material, the presently disclosed composition for an all-solid-state battery is a composition for a solid electrolyte layer that can be used to form a solid electrolyte layer of an all-solid-state battery. Specifically, the composition for a solid electrolyte layer contains at least the presently disclosed binder particles and solid electrolyte particles and may optionally further contain additives, such as a reinforcing material, that express various functions.

In a case in which the presently disclosed composition for an all-solid-state battery contains a positive electrode active material, the presently disclosed composition for an all-solid-state battery is a composition for a positive electrode active material layer that can be used to form a positive electrode active material layer of an all-solid-state battery. Specifically, the composition for a positive electrode active material layer contains at least the presently disclosed binder particles, a positive electrode active material, and solid electrolyte particles and may optionally further contain additives, such as a conductive additive and a reinforcing material, that express various functions.

In a case in which the presently disclosed composition for an all-solid-state battery contains a negative electrode active material, the presently disclosed composition for an all-solid-state battery is a composition for a negative electrode active material layer that can be used to form a negative electrode active material layer of an all-solid-state battery. Specifically, the composition for a negative electrode active material layer contains at least the presently disclosed binder particles, a negative electrode active material, and solid electrolyte particles and may optionally further contain additives, such as a conductive additive and a reinforcing material, that express various functions.

<Solid electrolyte particles>

The solid electrolyte particles normally have a particulate form as a result of having undergone a pulverization step and have an indeterminate shape rather than a completely spherical shape. The size of fine particles is normally measured by a method in which the particles are irradiated with laser light and then scattered light is measured. In this situation, the particle diameter is a value that assumes a spherical shape as the shape of a single particle. When multiple particles are measured together, the proportion of particles of equivalent particle diameter can be expressed as a particle size distribution. Solid electrolyte particles forming a solid electrolyte layer are often indicated by an average particle diameter in terms of a value measured by this method.

The average particle diameter of the solid electrolyte particles is preferably not less than 0.3 $\mu$m and not more than 5.0 $\mu$m from a viewpoint of ion conduction resistance in a solid electrolyte layer. Note that the average particle diameter of the solid electrolyte particles is the volume-average particle diameter and refers to the particle diameter (D50) at which, in a particle size distribution (by volume) measured by laser diffraction, cumulative volume calculated from a small diameter end of the distribution reaches 50%.

In the case of an all-solid-state lithium secondary battery, the solid electrolyte particles preferably contain a crystalline inorganic lithium ion conductor or an amorphous inorganic lithium ion conductor but are not specifically limited so long as they exhibit conductivity of lithium ions.

Examples of crystalline inorganic lithium ion conductors include $Li_3N$, LISICON ($Li_{14}Zn(GeO_4)_4$), perovskite-type $Li_{0.5}La_{0.5}TiO_3$, LIPON ($Li_{3+y}PO_{4-x}N_x$), and Thio-LISICON ($Li_{3.25}Ge_{0.25}P_{0.75}S_4$).

Examples of amorphous inorganic lithium ion conductors include those that contain S (sulfur atom) and exhibit ion conductivity (i.e., sulfide solid electrolyte materials). In a case in which the all-solid-state battery in which the presently disclosed composition for an all-solid-state battery is to be used is an all-solid-state lithium secondary battery, the sulfide solid electrolyte material that is used may be a material that is obtained using a raw material composition containing $Li_2S$ and a sulfide of an element belonging to any of groups 13 to 15. The method by which the sulfide solid electrolyte material is synthesized using such a raw material composition may be an amorphization method, for example. The amorphization method may be mechanical milling or melt quenching, for example, and is preferably mechanical milling. This is because mechanical milling enables processing at normal temperature and simplification of the production process.

The element belonging to any of groups 13 to 15 may be Al, Si, Ge, P, As, Sb, or the like, for example. Moreover, the sulfide of an element belonging to any of groups 13 to 15 may, more specifically, be $Al_2S_3$, $SiS_2$, $GeS_2$, $P_2S_3$, $P_2S_5$, $As_2S_3$, $Sb_2S_3$, or the like, for example. Of these examples, a group 14 or group 15 sulfide is preferable. In particular, the sulfide solid electrolyte material obtained using a raw material composition containing $Li_2S$ and a sulfide of an element belonging to any of groups 13 to 15 is preferably a $Li_2S$-$P_2S_5$ material, a $Li_2S$-$SiS_2$ material, a $Li_2S$-$GeS_2$ material, or a $Li_2S$-$Al_2S_3$ material, and is more preferably a $Li_2S$-$P_2S_5$ material. The reason for this is that these materials have excellent Li ion conductivity.

The sulfide solid electrolyte material preferably includes bridging sulfur. This is because ion conductivity increases when bridging sulfur is included. The "inclusion of bridging sulfur" can be judged by considering, for example, measurement results of Raman spectroscopy, the composition ratio of raw material, measurement results of NMR, or the like.

The molar fraction of $Li_2S$ in the $Li_2S$-$P_2S_5$ material or $Li_2S$-$Al_2S_3$ material may be within a range of not less than 50% and not more than 74% from a viewpoint of more reliably obtaining a sulfide solid electrolyte material including bridging sulfur, and is preferably within a range of not less than 60% and not more than 74%.

Furthermore, the sulfide solid electrolyte material may be sulfide glass or may be crystallized sulfide glass obtained through heat treatment of this sulfide glass. The sulfide glass can be obtained by an amorphization method such as previously described, for example. The crystallized sulfide glass can be obtained through heat treatment of sulfide glass, for example.

In particular, the sulfide solid electrolyte material is preferably crystallized sulfide glass represented by $Li_7P_3S_{11}$. This is due to the particularly good Li ion conductivity thereof. The method by which $Li_7P_3S_{11}$ is synthesized may, for example, be a method in which $Li_2S$ and $P_2S_5$ are mixed in a molar ratio of 70:30, are then subjected to amorphization using a ball mill to synthesize sulfide glass, and then the obtained sulfide glass is heat treated at not lower than 150°C and not higher than 360°C to thereby synthesize $Li_7P_3S_{11}$.

Examples of amorphous inorganic lithium ion conductors also include those that include O (oxygen atom) and exhibit ion conductivity (i.e., oxide solid electrolyte materials). The oxide solid electrolyte material may be $Li_3N$, LISICON ($Li_{14}Zn(GeO_4)_4$), a perovskite-type material (for example, $Li_{0.5}La_{0.5}TiO_3$), a garnet-type material (for example, $Li_7La_3Zr_2O_{12}$), LIPON ($Li_{3+y}PO_{4-x}N_x$), Thio-LISICON ($Li_{3.25}Ge_{0.25}P_{0.75}S_4$), or the like.

<Positive electrode active material>

In the case of an all-solid-state lithium secondary battery, the positive electrode active material is a compound that can occlude and release lithium ions. Positive electrode active materials are broadly classified as positive electrode active materials that are formed of inorganic compounds and positive electrode active materials that are formed of organic compounds.

Examples of positive electrode active materials formed of inorganic compounds include transition metal oxides, complex oxides of lithium and a transition metal, and transition metal sulfides. The aforementioned transition metal may be Fe, Co, Ni, Mn, or the like. Specific examples of inorganic compounds that may be used in the positive electrode active material include lithium-containing complex metal oxides such as $LiCoO_2$, $LiNiO_2$, $LiMnO_2$, $LiMn_2O_4$, $LiFePO_4$,

and $LiFeVO_4$; transition metal sulfides such as $TiS_2$, $TiS_3$, and amorphous $MoS_2$; and transition metal oxides such as $Cu_2V_2O_3$, amorphous $V_2O$-$P_2O_5$, $MoO_3$, $V_2O_5$, and $V_6O_{13}$. These compounds may have undergone partial element substitution.

Examples of positive electrode active materials formed of organic compounds include polyaniline, polypyrrole, polyacenes, disulfide compounds, polysulfide compounds, and N-fluoropyridinium salts. The positive electrode active material may be a mixture of any of the inorganic compounds and organic compounds described above.

The average particle diameter of the positive electrode active material used herein is normally not less than 0.1 $\mu$m and not more than 50 $\mu$m, and preferably not less than 1 $\mu$m and not more than 20 $\mu$m from a viewpoint of improving battery characteristics such as load characteristics and charge/discharge cycle characteristics and from a viewpoint that a solid electrolyte secondary battery having a large charge/discharge capacity can be obtained and that handling of the composition for a positive electrode active material layer and handling during positive electrode production are easy. Note that the average particle diameter can be determined through measurement of a particle size distribution by laser diffraction.

<Negative electrode active material>

The negative electrode active material may be an allotrope of carbon such as graphite or coke. A negative electrode active material that is formed of an allotrope of carbon can be used in a mixed or coated form with a metal, metal salt, oxide, or the like. Other examples of negative electrode active materials that can be used include oxides and sulfates of silicon, tin, zinc, manganese, iron, nickel, and the like, metal lithium, lithium alloys such as Li-Al, Li-Bi-Cd, and Li-Sn-Cd, lithium transition metal nitrides, and silicon. In the case of a metal material, a metal foil or metal plate may be used in that form as an electrode, or the metal material may be used in a particulate form.

For a particulate negative electrode active material, the average particle diameter of the negative electrode active material is normally not less than 1 $\mu$m and not more than 50 $\mu$m, and preferably not less than 15 $\mu$m and not more than 30 $\mu$m from a viewpoint of improving battery characteristics such as initial efficiency, load characteristics, and charge/discharge cycle characteristics.

<Conductive additive>

Any conductive additive can be used without any specific limitations so long as it can impart electrical conductivity. Typical examples include carbon powders such as acetylene black, carbon black, and graphite; and fibers and foils of various metals.

<Reinforcing material>

Various types of inorganic fillers and organic fillers having a spherical, plate-like, rod-like, or fibrous form can be used as reinforcing materials.

<Content of binder particles in composition for solid electrolyte layer>

The content of the presently disclosed binder particles in the composition for a solid electrolyte layer is preferably 0.1 parts by weight or more, and more preferably 0.5 parts by weight or more relative to 100 parts by weight of the solid electrolyte particles, and is preferably 10 parts by weight or less, more preferably 7 parts by weight or less, and particularly preferably 5 parts by weight or less relative to 100 parts by weight of the solid electrolyte particles. When the content of the presently disclosed binder particles is within any of the ranges set forth above, binding capacity of the solid electrolyte particles to one another can be maintained while inhibiting movement of lithium ions from being impeded and resistance of a solid electrolyte layer from increasing.

<Content of binder particles in composition for positive electrode active material layer>

The content of the presently disclosed binder particles in the composition for a positive electrode active material layer is preferably 0.1 parts by weight or more, and more preferably 0.2 parts by weight or more relative to 100 parts by weight of the positive electrode active material, and is preferably 10 parts by weight or less, and more preferably 7 parts by weight or less relative to 100 parts by weight of the positive electrode active material from a viewpoint of preventing detachment of the electrode active material from an electrode without impeding battery reactions. When the content of the presently disclosed binder particles is within any of the ranges set forth above, detachment of the positive electrode active material from an electrode can be prevented without impeding battery reactions.

<Mass ratio of positive electrode active material and solid electrolyte particles in composition for positive electrode active material layer>

The mass ratio of the positive electrode active material and the solid electrolyte particles is preferably 90:10 to 50:50 (positive electrode active material:solid electrolyte particles), and more preferably 60:40 to 80:20 (positive electrode active material:solid electrolyte particles). When the mass ratio of the positive electrode active material is within any of the ranges set forth above, it is possible to inhibit a phenomenon in which the mass of the positive electrode active material in a battery decreases due to the mass ratio of the positive electrode active material being too small, ultimately leading to reduction of battery capacity. It is also possible to inhibit a phenomenon in which electrical conductivity cannot be sufficiently obtained and the positive electrode active material cannot be effectively used due to the mass ratio of the solid electrolyte particles being too small, ultimately leading to reduction of battery capacity.

<Content of binder particles in composition for negative electrode active material layer>

In a case in which the negative electrode active material has a particulate form, the content of the presently disclosed binder particles in the composition for a negative electrode active material layer is preferably 0.1 parts by mass or more, and more preferably 0.2 parts by mass or more relative to 100 parts by mass of the negative electrode active material, and is preferably 5 parts by mass or less, and more preferably 4 parts by mass or less relative to 100 parts by mass of the negative electrode active material from a viewpoint of preventing detachment of the electrode active material from an electrode without impeding battery reactions.

<Mass ratio of negative electrode active material and solid electrolyte particles in composition for negative electrode active material layer>

The mass ratio of the negative electrode active material and the solid electrolyte particles is preferably 90:10 to 50:50 (negative electrode active material:solid electrolyte particles), and more preferably 60:40 to 80:20 (negative electrode active material:solid electrolyte particles). When the mass ratio of the negative electrode active material is within any of the ranges set forth above, it is possible to inhibit a phenomenon in which the mass of the negative electrode active material in a battery decreases due to the mass ratio of the negative electrode active material being too small, ultimately leading to reduction of battery capacity. It is also possible to inhibit a phenomenon in which electrical conductivity cannot be sufficiently obtained and the negative electrode active material cannot be effectively used due to the mass ratio of the solid electrolyte particles being too small, ultimately leading to reduction of battery capacity.

<Production method of composition for all-solid-state battery>

No specific limitations are placed on the method by which the presently disclosed composition for an all-solid-state battery is produced. For example, powders of the components described above may be dry mixed by any method. The dry mixing may be a method using a mixing apparatus such as a stirring-type apparatus, a shaking-type apparatus, or a rotary-type apparatus, for example. Moreover, a method in which a dispersing and kneading apparatus such as a homogenizer, a ball mill, a bead mill, a planetary mixer, a sand mill, a roll mill, or a planetary kneader is used may be adopted, with a method using a planetary mixer, a ball mill, or a bead mill being preferable from a viewpoint of inhibiting agglomeration of powder particles.

(All-solid-state battery)

The presently disclosed all-solid-state battery includes a positive electrode that includes a positive electrode active material layer on a current collector, a negative electrode that includes a negative electrode active material layer on a current collector, and a solid electrolyte layer that is between the positive and negative electrode active material layers. At least one layer among the positive electrode active material layer, the negative electrode active material layer, and the solid electrolyte layer, and preferably all of these layers contain the presently disclosed binder particles.

<Solid electrolyte layer>

The solid electrolyte layer can be formed through powder compression molding in which a powder of the composition for a solid electrolyte layer described above is pressed. For example, the solid electrolyte layer may be formed by providing a powder of the composition for a solid electrolyte layer described above on the surface of the positive electrode active material layer or the negative electrode active material layer and then pressing the resultant laminated product in a thickness direction thereof. Alternatively, a solid electrolyte layer that is formed in the same manner on any releasable substrate may be peeled off and then affixed to the positive electrode active material layer or the negative electrode active material layer. The method by which the composition for a solid electrolyte layer is provided on an electrode active material layer or releasable substrate is not specifically limited and may be electrostatic screen printing, for example.

Although no specific limitations are placed on the amount of the powder of the composition for a solid electrolyte layer that is pressed, the amount is normally of a level such that the thickness of the solid electrolyte layer after pressing is not less than 5 $\mu$m and not more than 50 $\mu$m, and preferably not less than 8 $\mu$m and not more than 20 $\mu$m.

The pressure during pressing is preferably 5 MPa or more, and more preferably 7 MPa or more, and is preferably 700 MPa or less, and more preferably 500 MPa or less from a viewpoint of obtaining good battery characteristics. The method of pressing is not specifically limited and may be flat plate pressing, roll pressing, cold isostatic pressing (CIP), or the like, for example.

<Positive electrode active material layer>

The positive electrode active material layer can be formed through powder compression molding in which a powder of the composition for a positive electrode active material layer described above is pressed. For example, the positive electrode active material layer may be formed by providing a powder of the composition for a positive electrode active material layer described above on the surface of the subsequently described current collector or the solid electrolyte layer and then pressing the resultant laminated product in a thickness direction thereof. Alternatively, a positive electrode active material layer that is formed in the same manner on any releasable substrate may be peeled off and then affixed to the current collector or the solid electrolyte layer. The method by which the composition for a positive electrode active material layer is provided on the current collector, the solid electrolyte layer, or a releasable substrate is not specifically limited and may be electrostatic screen printing, for example.

Although no specific limitations are placed on the amount of the powder of the composition for a positive electrode active material layer that is pressed, the amount is normally of a level such that the thickness of each active material layer after pressing is not less than 5 $\mu$m and not more than 300 $\mu$m, and preferably not less than 10 $\mu$m and not more than 250 $\mu$m.

Moreover, the pressure during pressing and the pressing method may be the same as previously described for the composition for a solid electrolyte layer.

<Negative electrode active material layer>

In a case in which the negative electrode active material has a particulate form, the negative electrode active material layer can be formed through powder compression molding in which a powder of the composition for a negative electrode active material layer described above is pressed. For example, the negative electrode active material layer may be formed by providing a powder of the composition for a negative electrode active material layer described above on the surface of the subsequently described current collector or the solid electrolyte layer and then pressing the resultant laminated product in a thickness direction thereof. Alternatively, a negative electrode active material layer that is formed in the same manner on any releasable substrate may be peeled off and then affixed to the current collector or the solid electrolyte layer. The method by which the composition for a negative electrode active material layer is provided on the current collector, the solid electrolyte layer, or a releasable substrate is not specifically limited and may be electrostatic screen printing, for example.

Although no specific limitations are placed on the amount of the powder of the composition for a negative electrode active material layer that is pressed, the amount is normally of a level such that the thickness of the negative electrode active material layer after pressing is not less than 5 $\mu$m and not more than 300 $\mu$m, and preferably not less than 10 $\mu$m and not more than 250 $\mu$m.

Moreover, the pressure during pressing and the pressing method may be the same as previously described for the composition for a solid electrolyte layer.

<Current collector>

Current collectors used in formation of the positive electrode active material layer and the negative electrode active material layer are not specifically limited so long as they are electrically conductive and electrochemically durable materials. However, from a viewpoint of heat resistance, a metal material such as iron, copper, aluminum, nickel, stainless steel, titanium, tantalum, gold, or platinum is preferable. Of these examples, aluminum is particularly preferable for the positive electrode and copper is particularly preferable for the negative electrode. Although no specific limitations are placed on the shape of the current collector, a sheet shape of approximately 0.001 mm to 0.5 mm in thickness is preferable. The current collector is preferably used after being subjected to surface roughening in advance in order to increase adhesion strength with the positive/negative electrode active material layer described above. The method of surface roughening may be a mechanical polishing method, an electrolytic polishing method, a chemical polishing method, or the like. The mechanical polishing is performed, for example, using a coated abrasive to which abrasive grains are bonded, a whetstone, an emery wheel, or a wire brush including steel wire or the like. An intermediate layer may be formed on the surface of the current collector in order to increase electrical conductivity and/or adhesion strength of the current collector with the positive/negative electrode active material layer.

(Production method of all-solid-state battery)

The positive electrode in the all-solid-state battery is obtained by forming a positive electrode active material layer on a current collector. A commonly known positive electrode may be used as the positive electrode in a case in which the negative electrode and/or solid electrolyte layer is formed using the presently disclosed composition for an all-solid-state battery.

In a case in which the negative electrode active material is a metal foil or metal plate, the negative electrode active material may be used in that form as the negative electrode in the all-solid-state battery. Alternatively, in a case in which the negative electrode active material has a particulate form, the negative electrode may be obtained by forming a negative electrode active material layer on a separate current collector to the current collector of the positive electrode. A commonly known negative electrode may be used as the negative electrode in a case in which the positive electrode and/or solid electrolyte layer is formed using the presently disclosed composition for an all-solid-state battery.

The solid electrolyte layer in the all-solid-state battery is obtained by forming a solid electrolyte layer on the positive electrode active material layer or the negative electrode active material layer. A commonly known solid electrolyte layer may be used as the solid electrolyte layer in a case in which the positive electrode and/or negative electrode is formed using the presently disclosed composition for an all-solid-state battery.

The all-solid-state battery can be produced by producing the positive electrode, the negative electrode, and the solid electrolyte layer by any method and in any order without any specific limitations.

Specifically, the all-solid-state battery can, for example, be produced by (1) a method in which a laminate including a positive electrode active material layer, an electrolyte layer, and a negative electrode active material layer is produced and then current collectors are affixed to both sides of the laminate; (2) a method in which a positive electrode, a negative electrode, and a solid electrolyte layer are separately produced and are then affixed; (3) a method in which a solid electrolyte layer is formed on one electrode and then another electrode is affixed thereto; or (4) a method in which a laminate including a positive electrode active material layer, an electrolyte layer, and a negative electrode active material layer on one current collector is produced and then another current collector is affixed thereto.

An all-solid-state battery device obtained as described above is placed in a battery container either as obtained or after rolling, folding, or the like in accordance with the battery shape, and then the battery container is sealed to obtain an all-solid-state battery. Moreover, pressure increase inside the battery and the occurrence of overcharging or overdischarging can be prevented by placing an expanded metal; an overcurrent preventing device such as a fuse or PTC device; a lead plate; or the like in the battery container as necessary. The shape of the battery may be a coin type, button type, sheet type, cylinder type, prismatic type, flat type, or the like.

By using the presently disclosed binder particles for an all-solid-state battery or composition for an all-solid-state battery, it is possible to obtain a functional layer for an all-solid-state battery that makes it possible to obtain an all-solid-state battery having good battery characteristics even by a dry method, and it is also possible to obtain an all-solid-state battery that has good battery characteristics.

EXAMPLES

The following describes the present disclosure through examples. However, the present disclosure is not limited to these examples. Various characteristics were evaluated by the following methods. Note that "parts" and "%" in the present examples are by mass unless otherwise specified.

<Measurement of cohesion>

Using a powder tester (produced by Hosokawa Micron Corporation), sieves having opening sizes of 250 $\mu$m, 150 $\mu$m, and 75 $\mu$m were overlapped at upper, middle, and lower levels. Next, 2 g of binder particles produced in each example or comparative example were loaded onto the sieve having an opening size of 250 $\mu$m at the upper level and were vibrated for 60 seconds with a vibration width of 1 mm. Once the vibration had stopped, the cohesion was determined by the following equations 1 to 3.

1. (Weight of binder particles on sieve having opening size of 250 μm/2 g) × 100

2. (Weight of binder particles on sieve having opening size of 150 μm/2 g) × 100 × (3/5)

3. (Weight of binder particles on sieve having opening size of 75 μm/2 g) × 100 × (1/5)

The sum of the calculated values in equations 1 to 3, shown above, was taken to be the cohesion (%). A lower value for cohesion indicates better fluidity.

<Measurement of particle diameter>

A cumulative particle size distribution by volume was measured for binder particles produced in each example or comparative example using a laser diffraction/scattering particle size analyzer (Microtrac MT3200II produced by Nikkiso Co., Ltd.) by a dry method with a dispersing air pressure during measurement of 0.02 MPa. In the measured particle size distribution, the particle diameter at which cumulative volume calculated from a small diameter end of the distribution reached 50% was taken to be the volume-average particle diameter D50 of the binder particles.

<Measurement of glass-transition temperature>

A powdered measurement sample of binder particles produced in each example or comparative example was weighed into an aluminum pan in an amount of 10 mg and was then measured under conditions prescribed by JIS Z8703 in a measurement temperature range of -100°C to 200°C and at a heating rate of 20°C/min using a differential scanning calorimeter (produced by SII NanoTechnology Inc.; product name: EXSTAR DSC6220) so as to obtain a differential scanning calorimetry (DSC) curve. Note that an empty aluminum pan was used as a reference. The temperature at which a derivative signal (DDSC) exhibited a peak during the heating process was determined as the glass-transition temperature. Note that since multiple peaks were measured, the temperature corresponding to a peak having largest displacement was taken to be the glass-transition temperature of the binder particles.

<Measurement of water content>

After weighing 0.2 g of binder particles produced in each example or comparative example into a measurement vessel, these binder particles were left at a temperature of 25°C and a dew point of -60°C for 24 hours. Thereafter, the water content of the binder particles was measured by the Karl Fischer method (water vaporization method of JIS K-0068(2001); vaporization temperature: 150°C) using a coulometric titration water meter.

(Evaluation of battery characteristics)

<Evaluation of output characteristics>

Three all-solid-state secondary battery cells that were produced in each example or comparative example were charged to 4.2 V by a 0.1C constant-current method, were subsequently discharged to 3.0 V at 0.1C, and the 0.1C discharge capacity was determined. Next, the cells were charged to 4.2 V at 0.1C, were subsequently discharged to 3.0 V at 2C, and the 2C discharge capacity was determined. An average value of the 0.1C discharge capacity for the three cells was taken to be discharge capacity (a), an average value of the 2C discharge capacity for the three cells was taken to be discharge capacity (b), and a ratio (capacity ratio) of the discharge capacity (b) relative to the discharge capacity (a) (= discharge capacity (b)/discharge capacity (a) × 100(%)) was determined and was evaluated by the following standard. A larger value for the capacity ratio indicates better output characteristics.

A: Capacity ratio of 80% or more
B: Capacity ratio of not less than 70% and less than 80%
C: Capacity ratio of not less than 50% and less than 70%
D: Capacity ratio of less than 50%

<Evaluation of cycle characteristics>

An all-solid-state secondary battery produced in each example or comparative example was subjected to 50 cycles of charging and discharging at 45°C in which the all-solid-state secondary battery was charged from 3 V to 4.2 V at 0.1C and then discharged from 4.2 V to 3V at 0.1C. A value obtained by calculating the 0.1C discharge capacity of the 50th cycle as a percentage relative to the 0.1C discharge capacity of the 1st cycle was taken to be a capacity maintenance rate and was evaluated by the following standard. A larger value for the capacity maintenance rate indicates less reduction of discharge capacity and better high-temperature cycle characteristics.

    A: Capacity maintenance rate of 90% or more
    B: Capacity maintenance rate of not less than 80% and less than 90%
    C: Capacity maintenance rate of not less than 70% and less than 80%
    D: Capacity maintenance rate of less than 70%

(Example 1)

<Production of polymer>

A reactor having a mechanical stirrer and a condenser attached thereto was charged with 85 parts of deionized water and 0.2 parts of sodium dodecylbenzenesulfonate in a nitrogen atmosphere, these materials were subsequently heated to 55°C under stirring, and 0.3 parts of potassium persulfate was added into the reactor as a 5.0% aqueous solution. Next, a separate vessel having a mechanical stirrer attached thereto was charged with 66.25 parts of acrylonitrile (AN) as a nitrile group-containing monomer, 3 parts of methacrylic acid (MAA) as an ethylenically unsaturated acid monomer, 19 parts of butyl acrylate (BA) as an acrylic acid alkyl ester monomer having an alkyl chain carbon number of 4 or more, 11.5 parts of methyl methacrylate (MMA) as a methacrylic acid alkyl ester monomer having an alkyl chain carbon number of 4 or less, 0.25 parts of allyl methacrylate (AMA) as a cross-linkable monomer, 0.6 parts of sodium dodecylbenzenesulfonate, 0.035 parts of tert-dodecyl mercaptan, 0.4 parts of polyoxyethylene lauryl ether, and 80 parts of deionized water in a nitrogen atmosphere, and these materials were stirred and emulsified to produce a monomer mixture. This monomer mixture was added into the reactor at a constant rate over 5 hours while in a stirred and emulsified state and was reacted until the polymerization conversion rate reached 95% to yield a water dispersion of a polymer.

<Granulation and classification of binder particles>

The obtained water dispersion of the polymer was spray dried using a spray dryer (GEA produced by Niro) under conditions of a rotating disc atomizer (diameter: 150 mm), a rotation speed of 11,000 rpm, and a hot air temperature (outlet temperature) of 100°C so as to produce binder particles. Next, the obtained particles were classified using a specific mesh to obtain binder particles that had been adjusted to an average particle diameter D50 of 50 $\mu$m.
The obtained binder particles had a cohesion of 10% and a water content of 3,500 ppm, and the polymer had a glass-transition temperature of 86°C.

<Production of positive electrode active material layer>

A planetary mixer was used to perform 30 minutes of mixing of 70 parts of lithium cobalt oxide (number-average particle diameter: 11.5 $\mu$m) as positive electrode active material particles, 25.5 parts of sulfide glass composed of $Li_2S$ and $P_2S_5$ ($Li_2S/P_2S_5$ = 70 mol%/30 mol%; number-average particle diameter: 0.9 $\mu$m) as solid electrolyte particles, 2.5 parts of acetylene black as a conductive additive, and 2 parts of the binder particles obtained as described above. In this manner, a composition for a positive electrode active material layer was produced.
The obtained composition for a positive electrode active material layer, in an amount of 8.5 mg, was loaded into a circular tube shaped mold having a diameter of 10 mm. Pressing at 200 MPa was performed in the layer thickness direction to produce a positive electrode active material layer.

<Production of solid electrolyte layer>

In an argon gas atmosphere inside a glove box (water concentration: 0.6 mass ppm; oxygen concentration: 1.8 mass ppm), 100 parts of sulfide glass composed of $Li_2S$ and $P_2S_5$ ($Li_2S/P_2S_5$ = 70 mol%/30 mol%; number-average particle diameter: 0.9 $\mu$m) as solid electrolyte particles and 2 parts of the binder particles obtained as described above were mixed, and then 30 minutes of mixing thereof was performed by a planetary mixer. In this manner, a composition for a solid electrolyte layer was produced.

The obtained composition for a solid electrolyte layer, in an amount of 50 mg, was loaded into the mold described above such as to be arranged on the positive electrode active material layer. Pressing at 200 MPa was performed in the layer thickness direction to produce a solid electrolyte layer.

<Production of negative electrode active material layer>

After mixing 65 parts of graphite (number-average particle diameter: 20 $\mu$m) as negative electrode active material particles, 31.5 parts of sulfide glass composed of $Li_2S$ and $P_2S_5$ ($Li_2S/P_2S_5$ = 70 mol%/30 mol%; number-average particle diameter: 0.9 $\mu$m) as solid electrolyte particles, 1.5 parts of acetylene black as a conductive additive, and 2 parts of the binder particles obtained as described above, 30 minutes of mixing thereof was performed by a planetary mixer. In this manner, a composition for a negative electrode active material layer was produced.
The obtained composition for a negative electrode active material layer, in an amount of 5.5 mg, was loaded into the mold described above such as to be arranged on the solid electrolyte layer. Pressing at 200 MPa was performed in the layer thickness direction to produce a negative electrode active material layer.

<Production of all-solid-state secondary battery>

A laminate including the positive electrode active material layer, the solid electrolyte layer, and the negative electrode active material layer that was obtained as described above was removed from the mold. Aluminum foil as a positive electrode current collector, the aforementioned laminate, and copper foil as a negative electrode current collector were arranged in order inside the mold. Pressing at 200 MPa was performed in the layer thickness direction to produce an all-solid-state battery. The all-solid-state battery produced as described above was left at rest in a thermostatic tank set to a temperature of 120°C for 3 hours while being pressed at 60.0 MPa so as to impart adhesive strength between the binder particles and the active material particles and solid electrolyte particles. After heating, the all-solid-state battery was cooled to room temperature (25°C).

(Example 2)

A polymer was produced in the same way as in Example 1 with the exception that 19 parts of 2-ethylhexyl acrylate (2EHA) was used instead of 19 parts of butyl acrylate (BA) as an acrylic acid alkyl ester monomer having an alkyl chain carbon number of 4 or more. Moreover, granulation and classification of the obtained polymer were performed in the same way as described above to produce binder particles having an average particle diameter D50 of 38 $\mu$m. The obtained binder particles had a cohesion of 10% and a water content of 3,600 ppm, and the polymer had a glass-transition temperature of 90°C.
These binder particles were used to produce compositions for an all-solid-state battery (composition for a positive electrode active material layer, composition for a solid electrolyte layer, and composition for a negative electrode active material layer) and to produce an all-solid-state battery in the same way as in Example 1.

(Example 3)

A polymer was produced in the same way as in Example 1 with the exception that 66.25 parts of styrene (St) as an aromatic vinyl monomer was used instead of 66.25 parts of acrylonitrile (AN) as a nitrile group-containing monomer. Moreover, granulation and classification of the obtained polymer were performed in the same way as described above to produce binder particles having an average particle diameter D50 of 50 $\mu$m. The obtained binder particles had a cohesion of 10% and a water content of 3,300 ppm, and the polymer had a glass-transition temperature of 83°C. These binder particles were used to produce compositions for an all-solid-state battery (composition for a positive electrode active material layer, composition for a solid electrolyte layer, and composition for a negative electrode active material layer) and to produce an all-solid-state battery in the same way as in Example 1.

(Example 4)

A polymer, binder particles, compositions for an all-solid-state battery (composition for a positive electrode active material layer, composition for a solid electrolyte layer, and composition for a negative electrode active material layer), and an all-solid-state battery were produced in the same way as in Example 1 with the exception that the average particle diameter D50 of the binder particles was adjusted to 85 $\mu$m. The obtained binder particles had a cohesion of 12% and a water content of 4,000 ppm, and the polymer had a glass-transition temperature of 86°C.

(Example 5)

A polymer, binder particles, compositions for an all-solid-state battery (composition for a positive electrode active material layer, composition for a solid electrolyte layer, and composition for a negative electrode active material layer), and an all-solid-state battery were produced in the same way as in Example 1 with the exception that the average particle diameter D50 of the binder particles was adjusted to 16 μm. The obtained binder particles had a cohesion of 9.5% and a water content of 4,100 ppm, and the polymer had a glass-transition temperature of 86°C.

(Example 6)

A polymer was produced in the same way as in Example 1 with the exception that the charged amount of methacrylic acid (MAA) was changed to 2.5 parts, the charged amount of butyl acrylate (BA) was changed to 24 parts, the charged amount of methyl methacrylate (MMA) was changed to 19 parts, the charged amount of acrylonitrile (AN) was changed to 54.3 parts, and the charged amount of allyl methacrylate (AMA) was changed to 0.2 parts. Moreover, granulation and classification of the obtained polymer were performed in the same way as described above to produce binder particles having an average particle diameter D50 of 55 μm. The obtained binder particles had a cohesion of 20% and a water content of 4,200 ppm, and the polymer had a glass-transition temperature of 81°C. These binder particles were used to produce compositions for an all-solid-state battery (composition for a positive electrode active material layer, composition for a solid electrolyte layer, and composition for a negative electrode active material layer) and to produce an all-solid-state battery in the same way as in Example 1.

(Example 7)

A polymer was produced in the same way as in Example 1 with the exception that the charged amount of methacrylic acid (MAA) was changed to 5 parts, the charged amount of allyl methacrylate (AMA) was changed to 0.4 parts, the charged amount of butyl acrylate (BA) was changed to 10 parts, the charged amount of methyl methacrylate (MMA) was changed to 7 parts, and the charged amount of acrylonitrile (AN) was changed to 77.6 parts. Moreover, granulation and classification of the obtained polymer were performed in the same way as described above to produce binder particles having an average particle diameter D50 of 45 μm. The obtained binder particles had a cohesion of 1.5% and a water content of 4,500 ppm, and the polymer had a glass-transition temperature of 94°C. These binder particles were used to produce compositions for an all-solid-state battery (composition for a positive electrode active material layer, composition for a solid electrolyte layer, and composition for a negative electrode active material layer) and to produce an all-solid-state battery in the same way as in Example 1.

(Example 8)

A polymer was produced in the same way as in Example 1 with the exception that the charged amount of butyl acrylate (BA) was changed to 37 parts, the charged amount of methyl methacrylate (MMA) was changed to 15 parts, and the charged amount of acrylonitrile (AN) was changed to 44.75 parts. Moreover, granulation and classification of the obtained polymer were performed in the same way as described above to produce binder particles having an average particle diameter D50 of 53 μm. The obtained binder particles had a cohesion of 25% and a water content of 3,800 ppm, and the polymer had a glass-transition temperature of 68°C. Compositions for an all-solid-state battery (composition for a positive electrode active material layer, composition for a solid electrolyte layer, and composition for a negative electrode active material layer) and an all-solid-state battery were produced in the same way as in Example 1.

(Example 9)

A polymer was produced in the same way as in Example 1 with the exception that the charged amount of methacrylic acid (MAA) was set as 5 parts, the charged amount of butyl acrylate (BA) was set as 9 parts, the charged amount of methyl methacrylate (MMA) was set as 5 parts, and 80.75 parts of methacrylonitrile (MAN) was used instead of 66.25 parts of acrylonitrile (AN). Moreover, granulation and classification of the obtained polymer were performed in the same way as described above to produce binder particles having an average particle diameter D50 of 60 μm. The obtained binder particles had a cohesion of 25% and a water content of 3,900 ppm, and the polymer had a glass-transition temperature of 110°C. These binder particles were used to produce compositions for an all-solid-state battery (composition for a positive electrode active material layer, composition for a solid electrolyte layer, and composition for a negative electrode active material layer) and to produce an all-solid-state battery in the same way as in Example 1.

(Example 10)

A polymer, compositions for an all-solid-state battery (composition for a positive electrode active material layer, composition for a solid electrolyte layer, and composition for a negative electrode active material layer), and an all-solid-state battery were produced in the same way as in Example 1 with the exception that 100 parts of garnet-type $Li_7La_3Zr_2O_{12}$ as an oxide solid electrolyte was used instead of sulfide glass composed of $Li_2S$ and $P_2S_5$ as solid electrolyte particles. The obtained binder particles had a cohesion of 10%, an average particle diameter D50 of 50 μm, and a water content of 4,200 ppm, and the polymer had a glass-transition temperature of 86°C.

(Comparative Example 1)

A polymer was produced in the same way as in Example 1 with the exception that the charged amount of methacrylic acid (MAA) was changed to 9 parts, the charged amount of allyl methacrylate (AMA) was changed to 1.9 parts, the charged amount of butyl acrylate (BA) was changed to 5 parts, the charged amount of methyl methacrylate (MMA) was changed to 5 parts, and the charged amount of acrylonitrile (AN) was changed to 79.1 parts. Moreover, granulation and classification of the obtained polymer were performed in the same way as described above to produce binder particles having an average particle diameter D50 of 55 μm. The obtained binder particles had a cohesion of 0.5% and a water content of 3,600 ppm, and the polymer had a glass-transition temperature of 105°C. These binder particles were used to produce compositions for an all-solid-state battery (composition for a positive electrode active material layer, composition for a solid electrolyte layer, and composition for a negative electrode active material layer) and to produce an all-solid-state battery in the same way as in Example 1.

(Comparative Example 2)

A polymer was produced in the same way as in Example 1 with the exception that the charged amount of methacrylic acid (MAA) was changed to 1.5 parts, the charged amount of allyl methacrylate (AMA) was changed to 0.1 parts, the charged amount of butyl acrylate (BA) was changed to 40 parts, the charged amount of methyl methacrylate (MMA) was changed to 15 parts, and the charged amount of acrylonitrile (AN) was changed to 43.4 parts. Moreover, granulation and classification of the obtained polymer were performed in the same way as described above to produce binder particles having an average particle diameter D50 of 48 μm. The obtained binder particles had a cohesion of 45% and a water content of 4,000 ppm, and the polymer had a glass-transition temperature of 63°C. These binder particles were used to produce compositions for an all-solid-state battery (composition for a positive electrode active material layer, composition for a solid electrolyte layer, and composition for a negative electrode active material layer) and to produce an all-solid-state battery in the same way as in Example 1.

(Comparative Example 3)

A polymer, binder particles, compositions for an all-solid-state battery (composition for a positive electrode active material layer, composition for a solid electrolyte layer, and composition for a negative electrode active material layer), and an all-solid-state battery were produced in the same way as in Example 1 with the exception that the average particle diameter D50 of the binder particles was adjusted to 8 μm. The obtained binder particles had a cohesion of 9% and a water content of 4,200 ppm, and the polymer had a glass-transition temperature of 86°C.

(Comparative Example 4)

A polymer, binder particles, compositions for an all-solid-state battery (composition for a positive electrode active material layer, composition for a solid electrolyte layer, and composition for a negative electrode active material layer), and an all-solid-state battery were produced in the same way as in Example 1 with the exception that the average particle diameter D50 of the binder particles was adjusted to 170 μm. The obtained binder particles had a cohesion of 13% and a water content of 4,100 ppm, and the polymer had a glass-transition temperature of 86°C.

Table 1

| | | | Example 1 | Example 2 | Example 3 | Example 4 | Example 5 | Example 6 | Example 7 | Example 8 | Example 9 | Example 10 | Comparative Example 1 | Comparative Example 2 | Comparative Example 3 | Comparative Example 4 |
|---|---|---|---|---|---|---|---|---|---|---|---|---|---|---|---|---|---|
| | Cohesion [%] | | 10 | 10 | 10 | 12 | 9.5 | 20 | 1.5 | 25 | 25 | 10 | 0.5 | 45 | 9 | 13 |
| | Volume-average particle diameter D50 [μm] | | 50 | 38 | 50 | 85 | 16 | 55 | 45 | 53 | 60 | 50 | 55 | 48 | 8 | 170 |
| | Water content [ppm] | | 3500 | 3600 | 3300 | 4000 | 4100 | 4200 | 4500 | 3800 | 3900 | 4200 | 3600 | 4000 | 4200 | 4100 |
| Binder particles | Glass-transition temperature [°C] | | 86 | 90 | 83 | 86 | 86 | 81 | 94 | 68 | 110 | 86 | 105 | 63 | 86 | 86 |
| | | Ethylenically unsaturated acid monomer unt | MAA | MAA | MAA | MAA | MAA | MAA | MAA | MAA | MAA | MAA | MAA | MAA | MAA | MAA |
| | | Proportional content (mass%) | 3 | 3 | 3 | 3 | 3 | 2.5 | 5 | 3 | 5 | 3 | 9 | 1.5 | 3 | 3 |
| | | Acrylic acid alkyl ester monomer unt having alkyl chain carbon number of 4 or more | BA | 2EHA | BA | BA | BA | BA | BA | BA | BA | BA | BA | BA | BA | BA |
| | | Proportional content (mass%) | 19 | 19 | 19 | 19 | 19 | 24 | 10 | 37 | 9 | 19 | 5 | 40 | 19 | 19 |

(continued)

| | | | | Example 1 | Example 2 | Example 3 | Example 4 | Example 5 | Example 6 | Example 7 | Example 8 | Example 9 | Example 10 | Comparative Example 1 | Comparative Example 2 | Comparative Example 3 | Comparative Example 4 |
|---|---|---|---|---|---|---|---|---|---|---|---|---|---|---|---|---|---|
| Polymer | Chemical composition | Methacrylic acid alkyl ester monomer unt having alkyl chain carbon number of 4 or less | MMA | MMA | MMA | MMA | MMA | MMA | MMA | MMA | MMA | MMA | MMA | MMA | MMA | MMA | MMA |
| | | | Proportional content (mass%) | 11.5 | 11.5 | 11.5 | 11.5 | 11.5 | 19 | 7 | 15 | 5 | 11.5 | 5 | 15 | 11.5 | 11.5 |
| | | | Nitrile group-containing monomer unit | AN | AN | - | AN | AN | AN | AN | AN | MAN | AN | AN | AN | AN | AN |
| | | | Proportional content (mass%) | 66.25 | 66.25 | - | 66.25 | 66.25 | 54.3 | 77.6 | 44.75 | 80.75 | 66.25 | 79.1 | 43.4 | 66.25 | 66.25 |
| | | | Aromatic vinyl monomer unt | - | - | St | - | - | - | - | - | - | - | - | - | - | - |
| | | | Proportional content (mass%) | - | - | 66.25 | - | - | - | - | - | - | - | - | - | - | - |

(continued)

| | | Example 1 | Example 2 | Example 3 | Example 4 | Example 5 | Example 6 | Example 7 | Example 8 | Example 9 | Example 10 | Comparative Example 1 | Comparative Example 2 | Comparative Example 3 | Comparative Example 4 |
|---|---|---|---|---|---|---|---|---|---|---|---|---|---|---|---|
| | Cross-linkabe monomer unt | AMA | AMA | AMA | AMA | AMA | AMA | AMA | AMA | AMA | AMA | AMA | AMA | AMA | AMA |
| | Proportional content (mass%) | 0.25 | 0.25 | 0.25 | 0.25 | 0.25 | 0.2 | 0.4 | 0.25 | 0.25 | 0.25 | 1.9 | 0.1 | 0.25 | 0.25 |
| Solid electrolyte | Type | $Li_2S/P_2S_5$ | $Li_2S/P_2S_5$ | $Li_2S/P_2S_5$ | $Li_2S/P_2S_5$ | $Li_2S/P_2S_5$ | $Li_2S/P_2S_5$ | $Li_2S/P_2S_5$ | $Li_2S/P_2S_5$ | $Li_2S/P_2S_5$ | Garnet-type $Li_7La_3Zr_2O_{12}$ | $Li_2S/P_2S_5$ | $Li_2S/P_2S_5$ | $Li_2S/P_2S_5$ | $Li_2S/P_2S_5$ |
| Evaluation | Output characteristics | A | A | A | A | B | A | A | B | A | B | C | C | D | C |
| | Cycle characteristics | A | A | A | B | A | B | B | B | B | A | D | D | C | D |

Abbreviations in Table 1 have the following meanings.

MAA: Methacrylic acid
BA: Butyl acrylate
MMA: Methyl methacrylate
2EHA: 2-Ethylhexyl acrylate
AN: Acrylonitrile
MAN: Methacrylonitrile
St: Styrene
AMA: Allyl methacrylate

It can be seen from the results in Table 1 that all-solid-state batteries produced by a dry method using the binder particles of Examples 1 to 10, which have a cohesion and a volume-average particle diameter D50 that are within particular ranges, have both excellent output characteristics and excellent cycle characteristics. In contrast, it can be seen that all-solid-state batteries produced by a dry method using the binder particles of Comparative Examples 1 and 2, which have a cohesion that is outside of a particular range, and all-solid-state batteries produced by a dry method using the binder particles of Comparative Examples 3 and 4, which have a volume-average particle diameter D50 that is outside of a particular range, have both poor output characteristics and poor cycle characteristics.

INDUSTRIAL APPLICABILITY

According to the present disclosure, it is possible to provide binder particles for an all-solid-state battery, a composition for an all-solid-state battery, and a functional layer for an all-solid-state battery with which an all-solid-state battery having excellent battery characteristics can be obtained even in a situation in which the all-solid-state battery is produced by a dry method, and also to provide an all-solid-state battery having excellent battery characteristics even in a situation in which the all-solid-state battery is produced by a dry method.

**Claims**

1. Binder particles for an all-solid-state battery comprising a polymer and having a cohesion of not less than 1% and less than 30% and a volume-average particle diameter D50 of not less than 10 $\mu$m and not more than 100 $\mu$m.

2. The binder particles for an all-solid-state battery according to claim 1, wherein the polymer has a glass-transition temperature of not lower than 50°C and not higher than 120°C.

3. The binder particles for an all-solid-state battery according to claim 1 or 2, wherein

   the polymer includes an ethylenically unsaturated acid monomer unit, and
   the ethylenically unsaturated acid monomer unit has a proportional content of not less than 1.5 mass% and less than 10 mass% in the polymer.

4. The binder particles for an all-solid-state battery according to any one of claims 1 to 3, wherein

   the polymer includes an acrylic acid alkyl ester monomer unit having an alkyl chain carbon number of 4 or more and a methacrylic acid alkyl ester monomer unit having an alkyl chain carbon number of 4 or less, and
   the acrylic acid alkyl ester monomer unit having an alkyl chain carbon number of 4 or more has a proportional content of not less than 5 mass% and not more than 40 mass% in the polymer and the methacrylic acid alkyl ester monomer unit having an alkyl chain carbon number of 4 or less has a proportional content of not less than 5 mass% and not more than 40 mass% in the polymer.

5. The binder particles for an all-solid-state battery according to any one of claims 1 to 4, wherein the polymer includes at least one monomer unit selected from the group consisting of a nitrile group-containing monomer unit and an aromatic vinyl monomer unit.

6. The binder particles for an all-solid-state battery according to any one of claims 1 to 5, wherein

   the polymer includes a cross-linkable monomer unit, and

the cross-linkable monomer unit has a proportional content of not less than 0.1 mass% and less than 2.0 mass% in the polymer.

7. A composition for an all-solid-state battery comprising:

the binder particles for an all-solid-state battery according to any one of claims 1 to 6; and
solid electrolyte particles.

8. The composition for an all-solid-state battery according to claim 7, further comprising an electrode active material.

9. The composition for an all-solid-state battery according to claim 8, further comprising a conductive additive.

10. A functional layer for an all-solid-state battery formed from the composition for an all-solid-state battery according to any one of claims 7 to 9.

11. An all-solid-state battery comprising the functional layer for an all-solid-state battery according to claim 10.

<table>
<tr><td colspan="2" align="center">**INTERNATIONAL SEARCH REPORT**</td><td colspan="2">International application No.<br>PCT/JP2021/001865</td></tr>
</table>

**A. CLASSIFICATION OF SUBJECT MATTER**

C08F 212/06(2006.01)i; C08F 220/10(2006.01)i; C08F 220/44(2006.01)i; H01M
4/62(2006.01)i; H01M 10/0562(2010.01)i
FI: H01M4/62 Z; C08F220/44; C08F220/10; C08F212/06; H01M10/0562

According to International Patent Classification (IPC) or to both national classification and IPC

**B. FIELDS SEARCHED**

Minimum documentation searched (classification system followed by classification symbols)
C08F212/06; C08F220/10; C08F220/44; H01M4/62; H01M10/0562

Documentation searched other than minimum documentation to the extent that such documents are included in the fields searched

| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2012-227107 A (SUMITOMO ELECTRIC INDUSTRIES, LTD.) 15 November 2012 (2012-11-15) claims, paragraph [0029], examples | 1-2, 7-11<br>3-6 |
| A | WO 2016/152164 A1 (ZEON CORP.) 29 September 2016 (2016-09-29) entire text | 1-11 |

☐ Further documents are listed in the continuation of Box C.   ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>25 March 2021 (25.03.2021) | Date of mailing of the international search report<br>06 April 2021 (06.04.2021) |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**
Information on patent family members

International application No.

PCT/JP2021/001865

| Patent Documents referred in the Report | Publication Date | Patent Family | Publication Date |
|---|---|---|---|
| JP 2012-227107 A | 15 Nov. 2012 | (Family: none) | |
| WO 2016/152164 A1 | 29 Sep. 2016 | CN 107408673 A whole document KR 10-2017-0129732 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6459691 B
- JP 2015088486 A
- WO 2016136090 A1